Europäisches Patentamt

(19) European Patent Office

Office européen des brevets

(11) Veröffentlichungsnummer: **0 301 340**
**B1**

## EUROPÄISCHE PATENTSCHRIFT

(12)

(45) Veröffentlichungstag der Patentschrift:
**10.10.90**

(21) Anmeldenummer: **88111491.2**

(22) Anmeldetag: **16.07.88**

(51) Int. Cl.⁵: **E04G 17/04**

(54) Befestigungsklammer zum Verbinden der Randstege von Schaltafeln.

(30) Priorität: **28.07.87 DE 3724872**

(43) Veröffentlichungstag der Anmeldung:
**01.02.89 Patentblatt 89/5**

(45) Bekanntmachung des Hinweises auf die Patenterteilung:
**10.10.90 Patentblatt 90/41**

(84) Benannte Vertragsstaaten:
**AT BE CH DE ES FR GB IT LI NL SE**

(56) Entgegenhaltungen:
**DE-B- 1 559 041**
**DE-C- 2 759 966**

(73) Patentinhaber: **Maier, Josef, Schwimmbadstrasse 11,**
**D-7611 Steinach(DE)**

(72) Erfinder: **Merkel, Josef,**
**Allmendweg 11 Welschensteinach, D-7619 Steinach(DE)**

(74) Vertreter: **Schmitt, Hans, Dipl.-Ing. et al, Patentanwälte**
**Dipl.-Ing H. Schmitt Dipl.-Ing. W. Maucher**
**Dreikönigstrasse 13, D-7800 Freiburg(DE)**

**Beschreibung**

Die Erfindung betrifft eine Befestigungsklammer zum Verbinden von rechtwinklig zu einer Schalhaut angeordneten Randstegen von Schaltafeln mit zwei gegensinnig gegen die voneinander abgewandten Oberflächen der beiden Randstege bewegbaren Spannbacken und mit einem zum Andrücken und Festlegen der Spannbacken an den Randstegen an diesen Spannbacken quer zu ihren Anschlagflächen angreifenden Betätigungselement.

Aus der DE-PS 27 59 966 ist bereits eine Klammer zum Verbinden von zum Schaltafelrand hin offenen U-förmigen Profilen mit Längssicken bekannt, wobei die beiden Klemmbakken eine L-förmige Form haben und jeweils ein L-Schenkel in Gebrauchsstellung parallel zur Schalhaut verläuft und sich mit dem entsprechenden gegensinnigen L-Schenkel des zweiten Teiles überlappt, wobei die beiden L-Schenkel ineinandergeführt sein müssen.

Dabei ist in aufwendiger Weise ein Spezial-Randprofil an den Schaltafeln erforderlich und die Herstellung der beiden L-förmigen Klemmbacken mit ihrer gegenseitigen Führung ist als aufwendig anzusehen.

Der Erfindung liegt die Aufgabe zugrunde, eine Befestigungsklammer der eingangs erwähnten Art zu schaffen, die einfach an die Randstege von Schaltafeln ansetzbar und anpaßbar ist und deren Einzelteile relativ einfach und preiswert herstellbar und zusammensetzbar sind.

Zur Lösung dieser Aufgabe ist die Befestigungsklammer der eingangs erwähnten Art dadurch gekennzeichnet, daß die beiden Spannbacken als Bogenstücke ausgebildet und in einem etwa kreisförmigen Gehäuse geführt sind, welches einen radialen Ausschnitt zum Übergreifen der zu verbindenden Randstege der Schaltafeln hat, daß die Bogenstücke innerhalb dieses Ausschnittes mit ihren Anschlagflächen aus Führungen des Gehäuses austreten und daß an dem dem Ausschnitt gegenüberliegenden Bereich des Gehäuses als Betätigungselement eine Spreizvorrichtung zum Auseinanderdrücken der den Anschlagflächen der Spannbacken entgegengesetzten Enden oder Stirnseiten dieser Spannbacken vorgesehen ist.

Ein etwa kreisförmiges Gehäuse ist relativ einfach herstellbar und bietet für in seinem Inneren angeordnete Bogenstücke eine gute Führung, so daß die Spannbacken nicht gegeneinander geführt und bei ihrer Bewegung voneinander abhängig sind. Durch ein zwischen ihre den Spannstellen abseitigen Enden eintreibbares Spreizelement können sie auf ganz einfache Weise in ihre Klemmposition gebracht werden. Dabei erfolgt in vorteilhafter Weise eine praktisch synchrone Bewegung und Selbstanpassung dieser Spannbacken an die erfaßten Stege. Somit ist die gesamte Befestigungsklammer im Aufbau und in der Bedienung sehr einfach.

Als Spreizvorrichtung kann ein zwischen die beiden den Spannstellen abgewandten Enden der Klemmbacken eintreibbarer Keil vorgesehen sein. Dadurch ist das Verschieben der Klemmbacken in ihre Klemmposition sehr einfach und mit einem auf dem Schalungssektor gerne verwendeten Teil möglich.

Vorteilhafte Ausgestaltungen der erfindungsgemäßen Befestigungsklammer sind Gegenstand der Ansprüche 3 bis 13. Dabei enthält vor allem Anspruch 6 eine besonders günstige und zweckmäßige Ausgestaltung, die eine formschlüssige Verbindung zwischen den Spannbacken und den Randstegen der Schaltafeln erlaubt. Ein solcher Formschluß zumindest in Querrichtung zur Erstreckung der Randstege und der Längsränder der Schaltafeln wäre auch möglich, wenn die Spannbacken in Gebrauchsstellung entsprechende Wülste od.dgl. der Randstege übergreifen würden. Die Ansprüche 10 bis 13 enthalten Ausgestaltungen, die in vorteilhafter Weise ein Öffnen der Spannbacken mit Hilfe der in erster Linie zum Schließen dienenden Spreizvorrichtung ermöglichen, dieser also eine Doppelfunktion verleihen.

Nachstehend ist die Erfindung mit ihren ihr als wesentlich zugehörenden Einzelheiten anhand der Zeichnung noch näher beschrieben. Es zeigt in zum Teil schematisierter Darstellung :

Fig. 1 eine teilweise im Schnitt gehaltene Draufsicht einer erfindungsgemäßen Befestigungsklammer in Gebrauchsstellung, in welcher sie zwei Randstege benachbarter Schaltafeln zusammendrückt,

Fig. 2 eine teilweise im Querschnitt gehaltene Ansicht der Klammer gem. Fig. 1 mit Blickrichtung von der in diesem Falle nicht dargestellten Schaltafel her,

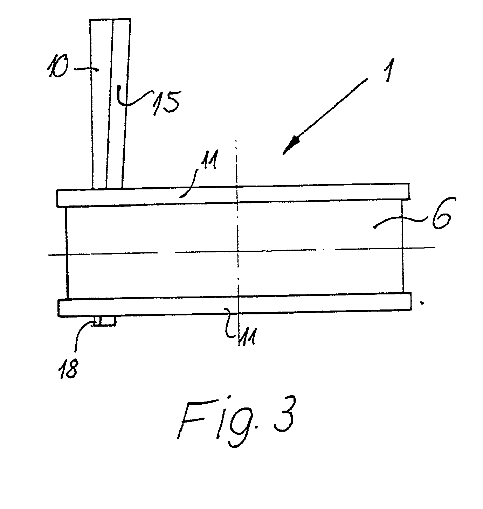

Fig. 3 eine Seitenansicht der Klammer sowie

Fig. 4 in vergrößertem Maßstab eine der Fig. 1 etwa entsprechende Darstellung mit einer auch zum Zurückziehen der Spannbacken geeigneten keilförmigen Spreizvorrichtung.

Eine im ganzen mit 1 bezeichnete Befestigungsklammer, im folgenden kurz "Klammer 1" genannt, dient zum Verbinden bzw. Zusammenklemmen von rechtwinklig zu einer Schalhaut 2 angeordneten Randstegen 3 von der Einfachheithalber nicht weiter dargestellten Schaltafeln.

Die Befestigungsklammer 1 hat dabei zwei gegensinnig gegen die voneinander abgewandten Oberflächen 3a der beiden Randstege 3 bewegbare Spannbacken 4. Das Betätigungselement zum Andrücken und Festlegen dieser Spannbacken 4 mit ihren Anschlagflächen 5 wird im folgenden noch näher beschrieben werden.

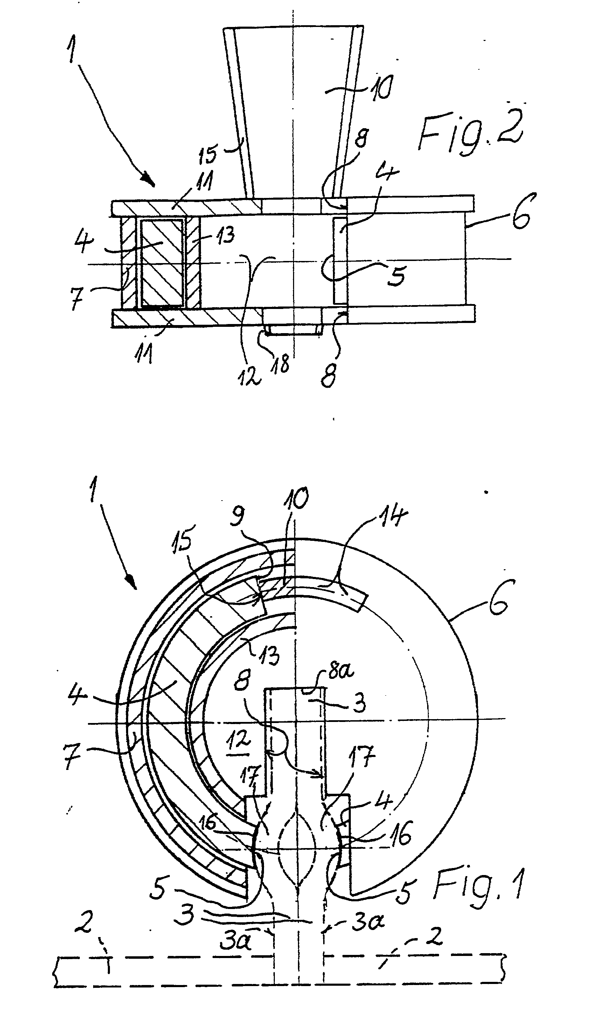

Vor allem in Fig. 1 erkennt man, daß die beiden Spannbakken 4 als Kreis-Bogenstücke ausgebildet und in einem etwa kreisförmigen Gehäuse 6 geführt sind. Unter Spannung werden sie dabei an sich an der Außenwand 7 dieses Gehäuses 6 anliegen, während in Fig. 1 für die Spannstellung der besseren Übersicht wegen ein geringfügiger Abstand zwischen der Gehäusewand 7 und der Spannbacke 4 dargestellt ist.

In Fig. 1 erkennt man außerdem an dem Gehäuse 6 einen radialen Ausschnitt 8 zum Übergreifen der zu verbindenden Randstege 3 der Schaltafeln, die mit ihren freien Enden oder Rändern an dem Ende 8 a des Ausschnittes 8 zur Anlage kommen. Die als Spannbacken 4 dienenden Bogenstücke treten gemäß Fig. 1 innerhalb des Ausschnittes 8 mit ihren Anschlagflächen 5 aus den Führungen des Gehäuses aus. An dem dem Ausschnitt 8 gegenüberliegenden Bereich des Gehäuses 6 ist die schon erwähnte Spreizvorrichtung, im Ausführungsbeispiel ein zwischen die beiden den Spannstellen abgewandten Enden 9 der Klemmbacken 4 eintreibbarer Keil 10 zum Auseinanderdrücken der den Anschlagflächen 5 der Spannbakken 4 entgegengesetzten Enden 9 vorgesehen.

Somit ist die Handhabung der Klammer 1 sehr einfach, indem sie bei gelockertem Keil 10 mit ihrem Ausschnitt 8 über zwei aneinanderliegende Randstege 3 geschoben wird, wonach der Keil nur noch eingeschlagen werden muß, um die beiden Spannbacken 4 entlang den Führungswänden 7 in ihre in Fig. 1 dargestellte Klemmstellung zu bringen.

Gemäß den Figuren 2 u.3 sind dabei die Führungen für die Spannbacken 4 beidseitig von Abdeckplatten oder -wänden 11 abgeschlossen, insbesondere überdeckt, die auch den Innenraum 12 des Gehäuses 6 bis auf den Ausschnitt 8 für die Randstege 3 überdecken. Diese Abdeckplatten 11 haben im Bereich der den Spannstellen abgewandten Enden 9 der bogenförmigen Spannbacken 4 schlitzförmige Ausnehmungen 14 für den Durchtritt des Keiles 10.

In Fig. 1 u.2 erkennt man noch, daß der Innenraum 12 des Gehäuses 6 durch eine bogenförmige Zwischenwand 13 von den Klemmbacken 4 getrennt ist, so daß diese auch in gelockerter Position nicht innerhalb des Gehäuses 6 eine Position einnehmen können, wo ihre Enden 9 nicht mehr von dem Keil 10 erfaßt werden. Praktisch befinden sich die Klemmbacken 4 auf diese Weise innerhalb eines kreisringförmigen Führungskanales.

Der Keil 10 und die für seinen Durchtritt vorgesehenen Schlitze 14 (Fig.1) sind gebogen und haben dabei einen Krümmungsradius, der dem der Spannbacken 4 im Bereich der Angriffsstellen des Keiles 10 entspricht. Somit kann - wie in Fig. 1 dargestellt - die Schmalseite des im Querschnitt kreisbogenförmig gekrümmten Keiles 10 flächig an den stirnseitigen Enden 9 der Spannbacken 4 anliegen. Dazu ist es zweckmäßig, wenn die einander zugewandten Stirnseiten 9 der Spannbacken 4 unter dem selben Winkel und in gleicher Richtung schräg stehen, wie die sie beaufschlagenden Keilflächen 15.

Im Ausführungsbeispiel ist vorgesehen, daß die Anschlagflächen 5 der Spannbacken 4 Ausnehmungen, nämlich jeweils eine konkave Einsenkung 16 haben, die zu einer entsprechenden Aufwölbung 17 der Randstege der Schaltafeln im Berührbereich der Spannbacken paßt. Somit ergibt sich im Spannbereich sogar ein Formschluß in Erstreckungsrichtung der Ausnehmung 8.

In Löseposition der Spannbacken 4 bei angehobenem Keil 10 kann dessen schmale Seite gemäß Fig. 2 u.3 an der Unterseite des Gehäuses 6 der Klammer 1 noch überstehen. Somit ist die Klammer 1 jederzeit bedienbar und es muß nicht zuerst der Keil 10 in eine entsprechende Ausgangsposition gebracht werden. Gegebenenfalls könnte im Bereich des Überstandes 18 an dem Keil eine die dort vorgesehene Durchtrittsöffnung überragende Verbreiterung, ein Querstift od. dgl. Mittel zum Verhindern des Entnehmens des Keiles vorgesehen sein, so daß der Keil 10 unverlierbar wäre.

Gemäß Fig.2 ist der Querschnitt der bogenförmigen Klemmbacken 4 und der sie als Führung aufnehmenden Ringkanäle rechteckig, er könnte aber auch quadratisch sein. Dabei stehen jeweils zwei Begrenzungen der Berührflächen der Spannbacken 4 parallel zur Schalhaut 2 bzw. zu den Randstegen 3, während die obere und untere Abschlußplatte 11 in Gebrauchsstellung rechtwinklig zu den erfaßten Stegen 3 orientiert ist.

Insgesamt ergibt sich eine Klammer 1, deren beiden Klemmbacken 4 unabhängig voneinander geführt sind, dennoch aber mit Hilfe eines einzigen Keiles synchron bzw. gleichzeitig in ihre Klemmstellung gebracht werden können, ohne daß sie dabei aneinander geführt sein müßten. Die gewählte Kreisbogenform kommt dabei einer möglichst preiswerten Herstellung und einer guten Bedienbarkeit entgegen.

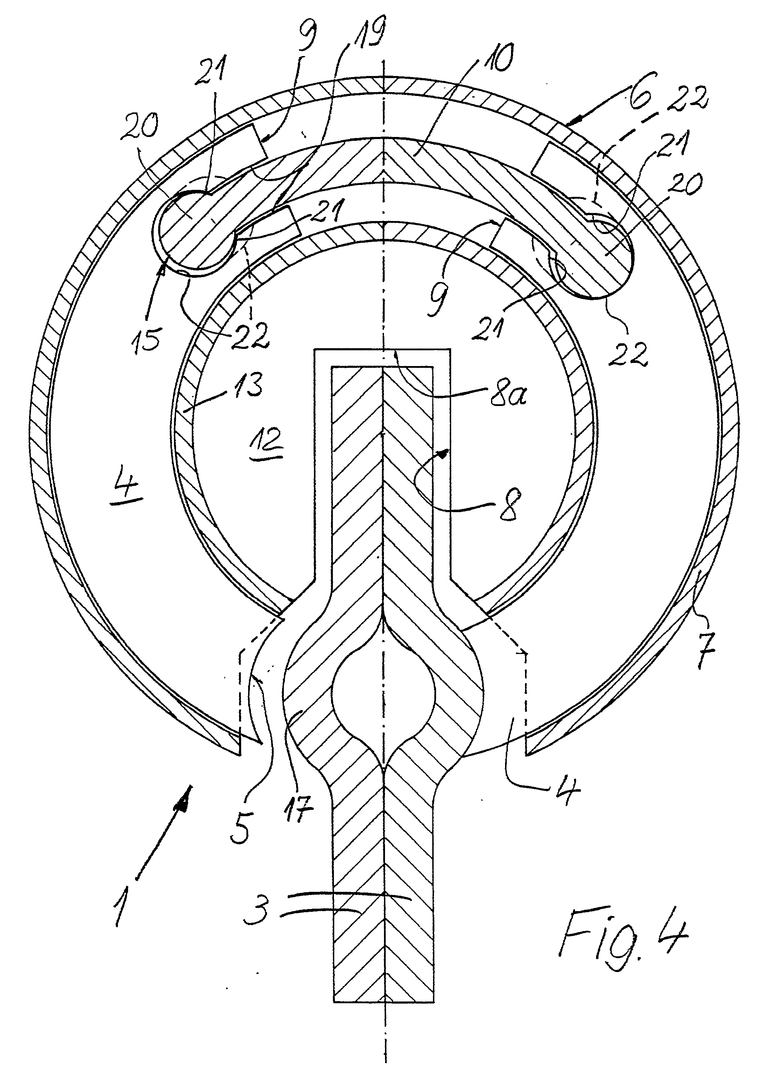

In Fig. 4 ist eine abgewandelte Ausführungsform der Befestigungsklammer 1 dargestellt, bei welcher die zum Verspreizen der Spannbacken 4 gegen die Randstege 3 dienenden Teile mit denen der vorbeschriebenen Ausführungsform übereinstimmen und deshalb übereinstimmende Bezugszeichen aufweisen. Es erübrigt sich somit, diese Teile und ihre Funktion erneut zu beschreiben, weil dafür die vorangegangene Beschreibung weiterhin gilt. Es sei lediglich erwähnt, daß in dieser Fig. 4 die rechte Spannbacke 4 in Schließstellung, die linke Spannbacke 4 jedoch in Offenstellung dargestellt sind.

Bei diesem Ausführungsbeispiel ist nun vorgesehen, daß die Spreizvorrichtung auch zum Zurückziehen der Spannbacken 4 in deren Offenstellung dient und deshalb formschlüssig an den Spannbacken 4 angreift. Man erkennt in Fig. 4 deutlich, daß der die Spreizvorrichtung bildende Keil 10, der einen der Krümmung der Spannbacken 4 und deren Führungsgehäuse entsprechend gekrümmten Querschnitt hat, mit seinen Keilflächen 15 in gemäß dem Keilwinkel schräg von oben nach unten verlaufende Nuten 19 in den Enden 9 der Spannbacken 4 paßt und eingreift. Dies führt zunächst schon zu einem besseren Zusammenwirken des Keiles 10 mit den Spannbacken 4 bei dem Verschieben der Spannbacken 4 in ihre Schließstellung, weil der Keil 10 besser geführt wird und somit ein Verkanten und Verklemmen vor dem endgültigen Anpressen der Spannbacken 4 an den zu verbindenen Randstegen 3 vermieden wird.

Dabei ist nun gemäß Fig. 4 zusätzlich vorgesehen, daß der Keil 10 entlang seinen beiden Keilflächen 15 jeweils eine Verdickung oder Führung mit gegenüber siener Querschnittsdicke vergrößertem Querschnitt aufweist, die im Ausführungsbeispiel als Wulst 20 ausgebildet ist. Die im Querschnitt ebenfalls etwas bogenförmige Nuten 19 haben einen sich in ihrem Inneren entsprechend erweiternden, Hinterschneidungen 21 bildenden Querschnitt. Es leuchtet ein, daß beim Ein schlagen dieses Keiles 10 senkrecht zu der Zeichenebene die beiden Spannbacken 4 in der schon beim vorangegangenen Ausführungsbeispiel beschriebenen Weise mit ihren Anschlagflächen 5 gegen die Stege 3 getrieben werden. Wird aber der Keil 10 umgekehrt gegenüber der Zeichenebene nach oben bewegt, wird durch die Wülste 20 innerhalb den Erweiterungen 22 an den Hinterschneidungen 21 eine entgegengesetzte Kraft auf die Spannbacken 4 ausgeübt, so daß sich ihre Anschlagflächen 5 wieder von den Stegen 3 entfernen, während sich ihre gegenüberliegenden Enden 9 zwangsweise nähern.

Während man im rechten Teil erkennt, wie der Wulst 20 fest an der Innenkontur der Erweiterung 22 anliegt, weil der Keil 10 die Spannbacke 4 gegen den Steg 3 drückt, ist im linken Teil dargestellt, wie nun der Wulst 20 an den Hinterschneidungen 21 anliegt, während die Spannbacke 4 durch das Anheben des Keiles 10 zurückgezogen wird. Dies kann ganz einfach dadurch geschehen, daß eine Kraft oder ein Schlag auf den unteren Überstand des Keiles 10 ausgeübt wird.

Der Querschnitt der Wülste 20 an dem Keil 10 und der Querschnitt der Erweiterungen 22 im Inneren der Nuten 19 ist im Ausführungsbeispiel etwa kreisförmig, was eine einfache Herstellung erlaubt. Dabei erkennt man, daß die Wülste 20 mit Spiel in die Erweiterungen 22 eingreifen, weil enge Toleranzen hier natürlich nicht erforderlich sind. Gleichzeitig erkennt man, daß die Hinterschneidungen 21 und die Erweiterungen 22 der Nuten 19 mit etwas Abstand von den Enden 9 im Inneren der Spannbacken 4 liegen, so daß auch die nicht verdickte Teilfläche gut geführt wird und die auftretenden Kräfte beim Zurückziehen der Spannbacken 4 ohne die Gefahr von störenden Verformungen an den Nuten 19 aufgebracht werden können.

## Patentansprüche

1. Befestigungsklammer (1) zum Verbinden von rechtwinklig zu einer Schalhaut (2) angeordneten Randstegen (3) von Schaltafeln mit zwei gegensinnig gegen die voneinander abgewandten Oberflächen (3a) der beiden Randstege (3) bewegbaren Spannbacken (4) und mit einem zum Andrücken und Festlegen der Spannbacken (4) an den Randstegen (3) an diesen Spannbacken (4) quer zu ihren Anschlagflächen (5) angreifenden Betätigungselement (10), **dadurch gekennzeichnet**, daß die beiden Spannbacken (4) als Bogenstücke ausgebildet und in einem etwa kreisförmigen Gehäuse (6) geführt sind, welches einen radialen Ausschnitt (8) zum Übergreifen der zu verbindenden Randstege (3) der Schaltafeln hat, daß die Bogenstücke innerhalb diedes Ausschnittes (8) mit ihren Anschlagflächen (5) aus Führungen (7) des Gehäuses (6) austreten und daß an dem dem Ausschnitt (8) gegenüberliegenden Bereich des Gehäuses (6) als Betätigungselement eine Spreizvorrichtung (10) zum Auseinanderdrücken der den Anschlagflächen (5) der Spannbacken (4) entgegengesetzten Enden (9) dieser Spannbacken vorgesehen ist.

2. Klammer nach Anspruch1, dadurch gekennzeichnet, daß als Spreizvorrichtung ein zwischen die beiden den Spannstellen abgewandten Enden (9) der Klemmbacken (4) eintreibbarer Keil (10) vorgesehen ist.

3. Klammer nach Anspruch 1 oder 2, dadurch gekennzeichnet, daß die Führungen (7) für die Spannbacken (4) vorzugsweise beidseitig von Abdeckplatten oder -wänden (11) abgeschlossen, insbesondere überdeckt sind, die auch den Innenraum (12) des Gehäuses (6) bis auf den Ausschnitt (8) für die Randstege (3) überdecken, und daß diese Abdeckplatten (11) im Bereich der den Spannstellen abgewandten Enden (9) der bogenförmigen Spannbacken (4) schlitzförmige Ausnehmungen für den Durchtritt des Keiles (10) haben.

4. Klammer nach einem der Ansprüche 1 bis 3, dadurch gekennzeichnet, daß der Keil (10) und die für seinen Durchtritt vorgesehenen Schlitze gebogen sind und einen Krümmungsradius haben, der dem der Spannbacken (4) im Bereich der Angriffsstellen des Keiles (10) entspricht, und daß die Schmalseiten des im Querschnitt kreisbogenförmig gekrümmten Keiles (10_ vorzugsweise flächig an den stirnseitigen Enden (9) der Spannbacken (4) anliegt.

5. Klammer nach einem der Ansprüche 1 bis 4, dadurch gekennzeichnet, daß die einander zugewandten Stirnseiten (9) der ihren Spannstellen abgewandten Enden der Spannbacken (4) unter demselben Winkel und in gleicher Richtung schräg stehen wie die sie beaufschlagenden Keilflächen (15).

6. Klammer nach einem der vorstehenden Ansprüche, dadurch gekennzeichnet, daß die Anschlagflächen (5) der Spannbacken (4) Ausnehmungen, vorzugsweise eine konkave Ein senkung (16) haben, die zu einer entsprechenden Aufwölbung (17) od.dgl. der Randstege (3) der Schaltafeln im Berührungsbereich der Spannbacken (4) paßt.

7. Klammer nach einem der Ansprüche 1 bis 6, dadurch gekennzeichnet, daß in Löseposition der Spannbacken (4) bei angehobenem Keil (10) dessen schmale Seite an der Unterseite des Gehäuses (6) der Klammer (1) oder Klemmvorrichtung übersteht und gegebenenfalls im Bereich des Überstandes (18) eine die dort vorgesehene Durchtrittsöffnung überragende Verbreiterung, einen Querstift od. dgl. Mittel zum Verhindern des Entnehmens des Keiles hat.

8. Klammer nach einem des Ansprüchew 1 bis 7, dadurch gekennzeichnet, daß der Querschnitt der bogenförmigen Klemmbacken (4) und der sie als Führung aufnehmenden Ringkanäle vorzugsweise rechteckig oder quadratisch ist und jeweils zwei Begrenzungen der Berührflächen der Spannbacken (4) parallel zur Schalhaut (2) bzw. zu den Randstegen (3) der Schaltafel orientiert sind und daß die obere und untere Abschlußplatte der Klammer in Gebrauchsstellung rechtwinklig zu den erfaßten Stegen orientiert ist.

9. Klammer nach einem der Ansprüche 1 bis 8, dadurch gekennzeichnet, daß der Innenraum (12) des Gehäuses (6) durch eine bogenförmige Zwischenwand (13) von den Klemmbacken (4) getrennt ist.

10. Klammer nach einem der Ansprüche 1 bis 9, dadurch gekennzeichnet, daß die Spreizvorrichtung zum Zurückziehen der Spannbacken (4) in deren Offenstellung formschlüssig an den Spannbacken (4) angreift.

11. Klammer nach einem der Ansprüche 1 bis 10, dadurch gekennzeichnet, daß der die Spreizvorrichtung bildende Keil (10) mit seinen Keilflächen (15) in vorzugsweise gemäß dem Keilwinkel schräg verlaufende Nuten (19) in den Enden (9) der Spannbacken (4) paßt und eingreift.

12. Klammer nach einem der Ansprüche 1 bis 11, dadurch gekennzeichnet, daß der Keil (10) entlang seinen beiden Keilflächen (15) jeweils eine Verdickung, einen Wulst od. dgl. Führung mit gegenüber seiner Querschnittsdicke vergrößertem Querschnitt aufweist und die Nuten (19) einen sich im Inneren entsprechend erweiternden, Hinterschneidungen (21) bildenden Querschnitt haben.

13. Klammer nach einem der vorstehenden Ansprüche, dadurch gekennzeichnet, daß der Querschnitt der Wülste (20) an dem Keil (10) und der Erweiterungen (22) in den Nuten (19) etwa kreisförmig ist und daß die Wülste (20) mit Spiel in die Erweiterungen (22) eingreifen.

**Revendications**

1. Pince de fixation (1) pour assembler des rebords (3) de panneaux de coffrage qui sont disposés perpendiculairement à une enveloppe de coffrage (2), avec deux mâchoires de serrage (4) déplaçables en sens contraires contre les faces opposées (3a) des deux rebords (3), et avec un élément d'actionnement (10) agissant sur les mâchoires de serrage (4) perpendiculairement à leurs faces de butée (5), pour presser et bloquer ces mâchoires de serrage (4) contre les rebords (3), caractérisée en ce que les deux mâchoires de serrage (4) sont réalisées sous la forme de pièces coudées et sont guidées dans un logement (6) approximativement circulaire, qui présente une découpure radiale (8) pour recouvrir les rebords (3) des panneaux de coffrage à assembler, en ce que les pièces coudées, à l'intérieur de cette découpure (8), sortent par leurs faces de butée (5) de guidages (7) du logement (6), et en ce qu'il est prévu comme élément d'actionnement, sur la région du logement (6) opposée à la découpure (8), un dispositif écarteur (10) pour écarter l'une de l'autre les extrémités (9) des mâchoires de serrage (9) qui sont opposées aux faces de butée (5) de ces mâchoires de serrage.

2. Pince selon la revendication 1, caractérisée en ce qu'il est prévu comme dispositif écarteur un coin (10) qui peut être enfoncé entre les deux extrémités (9) des mâchoires de serrage (4) qui sont éloignées des points de serrage.

3. Pince selon la revendication 1 ou 2, caractérisée en ce que les guidages (7) pour les mâchoires de serrage (4) sont de préférence fermés, et notamment recouverts, des deux côtés par des plaques ou parois de recouvrement (11), qui recouvrent également l'espace intérieur (12) du logement (6) à l'exception de la découpure (8) pour les rebords (3), et en ce que ces plaques de recouvrement (11) possèdent, dans la région des extrémités (9) des mâchoires de serrage coudées (4) qui sont éloignées des points de serrage, des évidements en forme de fentes pour le passage du coin (10).

4. Pince selon l'une des revendications 1 à 3, caractérisée en ce que le coin (10) et les fentes prévues pour son passage sont coudés, et possèdent un rayon de courbure qui correspond à celui des mâchoires de serrage (4) dans la région des points d'attaque du coin (10), et en ce que les côtés étroits du coin (10), qui est courbé avec une section en arc de cercle, s'appliquent de préférence à plat contre les extrémités (9) des côtés frontaux des mâchoires de serrage (4).

5. Pince selon l'une des revendications 1 à 4, caractérisée en ce que les côtés frontaux (9) en vis-à-vis des extrémités des mâchoires de serrage (4) qui sont éloignées de leurs points de serrage, sont en oblique sous le même angle et dans la même direction que les faces (15) du coin qui les sollicitent.

6. Pince selon l'une des revendications précédentes, caractérisée en ce que les faces de butée (5) des mâchoires de serrage (4) possèdent des évidements, de préférence une creusure concave (16), qui s'adapte sur un bombement correspondant (17) ou similaire des rebords (3) des panneaux de coffrage dans la région de contact des mâchoires de serrage.

7. Pince selon l'une des revendications 1 à 6, caractérisée en ce qu'en position desserrée des mâchoires de serrage (4), le coin (10) étant soulevé, son côté étroit dépasse du dessous du logement (6) de la pince (1) ou dispositif de serrage, et possède éventuellement, dans la région en saillie (18), un élargissement plus grand que l'ouverture de passage prévue, une clavette transversale ou un autre moyen similaire pour empêcher l'enlèvement du coin.

8. Pince selon l'une des revendications 1 à 7, caractérisée en ce que la section des mâchoires de serrage coudées (4) et des canaux annulaires qui les reçoivent comme guidage est de préférence rectangulaire ou carrée; et deux délimitations respectives des faces de contact des mâchoires de serrage (4) sont orientées parallèlement à l'enveloppe de coffrage (2) ou aux rebords (3) des panneaux de coffrage, et en ce que la plaque de recouvrement supérieure et inférieure de la pince est, en position d'utilisation, orientée perpendiculairement aux rebords saisis.

9. Pince selon l'une des revendications 1 à 8, caractérisée en ce que l'espace intérieur (12) du logement (6) est séparé des mâchoires de serrage (4) par une paroi intermédiaire coudée (13).

10. Pince selon l'une des revendications 1 à 9, caractérisée en ce que le dispositif écarteur agit par complémentarité de forme sur les mâchoires de serrage (4) pour ramener par traction les mâchoires de serrage (4) à leur position ouverte.

11. Pince selon l'une des revendications 1 à 10, caractérisée en ce que le coin (10) formant le dispositif écarteur s'adapte et agit par ses faces de coin (15) dans des rainures (19) pratiquées dans les extrémités (9) des mâchoires de serrage (4) qui s'étendent en oblique de préférence suivant à l'angle du coin.

12. Pince selon l'une des revendications 1 à 11, caractérisée en ce que le coin (10) présente le long de ses deux faces de coin (15) un épaississement respectif, bourrelet ou autre guidage similaire, de section agrandie par rapport à son épaisseur de section, et les rainures (19) possèdent une section s'élargissant à l'intérieur d'une manière correspondante, formant des contre-dépouilles (21).

13. Pince selon l'une des revendications précédentes, caractérisée en ce que la section des bourrelets (20) sur le coin (10) et des élargissements (22) dans les rainures (19) est approximativement circulaire, et en ce que les bourrelets (20) s'engagent avec jeu dans les élargissements (22).

**Claims**

1. A fastening clamp (1) to connect flanges (3) of form panels together, the flanges being disposed at right angles to a forming surface (2), including two clamping jaws (4) movable in opposite directions towards the surfaces (3a) averted from one another of the two flanges (3), and further including an operating element (10) engaging the clamping jaws (4) transversely to the abutment faces (5) of the latter to press the clamping jaws (4) and secure them against the flanges (3), characterized in that the two clamping jaws (4) take the form of arc members and are guided in an approximately circular housing (6) having a radial opening (8) for engaging over the flanges (3) which belong to the form panels and are to be connected, that the arc members have abutment faces (5) emerging inside said opening (8) from guides (7) of the housing (6) and that in the housing (6) area opposite the opening (8) provision is made for an expanding device (10) as an operating element for urging apart the clamping jaws (4) at the ends (9) thereof opposing the abutment faces (5) of said clamping jaws.

2. The clamp as claimed in claim 1, characterized in that a wedge (10) adapted to be driven inbetween the clamping jaws (4) at the two ends (9) thereof averted from the clamping points is provided as the expanding device.

3. The clamp as claimed in claim 1 or claim 2, characterized in that the guides (7) for the clamping jaws (4) are preferably closed on both sides by cover plates or cover walls (11), in particular are covered over, said cover plates or cover walls also covering over the interior (12) of the housing (6) except for the opening (8) for the flanges (3), and that in the region where the arcuate clamping jaws (4) have ends (9) averted from the clamping points said cover plates (11) have slot-shaped recesses for the passage of the wedge (10).

4. The clamp as claimed in any one of claims 1 to 3, characterized in that the wedge (10) and the slots provided for its passage are curved and have a radius of curvature corresponding to that of the clamping jaws (4) in the region of the engaging points of the wedge (10), and that the narrow sides of the wedge (10) of arcuate curvature in cross section preferably rest flat against the front ends (9) of the clamping jaws (4).

5. The clamp as claimed in any one of claims 1 to 4, characterized in that the front faces (9) turned towards each other at the ends of the clamping jaws (4) averted from the clamping points thereof are slanted at the same angle and in the same direction as the wedge faces (15) impacting them.

6. The clamp as claimed in any one of the preceding claims, characterized in that the abutment faces (5) of the clamping jaws (4) have recesses, preferably a concave depression (16) matching a corresponding convexity (17) or the like on the flanges (3) of the form panels in the area contacted by the clamping jaws.

7. The clamp as claimed in any one of claims 1 to 6, characterized in that in the release position of the clamping jaws (4), when the wedge (10) is raised, the narrow side of said wedge projects from the underside of the housing (6) of the clamp (1) or clamping device and in the region of the projection (18) may have a widening protruding beyond the passage provided there, a transverse pin or similar means to prevent the wedge from being removed.

8. The clamp as claimed in any one of claims 1 to 7, characterized in that the cross section of the arcuate clamping jaws (4) and the annular channels receiving them as a guide is preferably rectangular or square and that in each case two limits of the contacting faces of the clamping jaws (4) are oriented parallel to the forming surface (2) and to the flanges (3) of the form panels and that in the position for use the upper and lower closing plate of the clamp is oriented at right angles to the grasped flanges.

9. The clamp as claimed in any one of claims 1 to 8, characterized in that the interior (12) of the housing (6) is separated from the clamping jaws (4) by an arcuate partition (13).

10. The clamp as claimed in any one of claims 1 to 9, characterized in that the expanding device engages the clamping jaws (4) in a conjugate manner to retract them into their open position.

11. The clamp as claimed in any one of claims 1 to 10, characterized in that the wedge (10) which forms the expanding device fits and engages with its wedge faces (15) in grooves (19) in the ends (9) of the clamping jaws (4), said grooves preferably extending at a slant in accordance with the wedge angle.

12. The clamp as claimed in any one of claims 1 to 11, characterized in that the wedge (10) has along its two wedge faces (15) in each case a thickening, a bead or a similar guide of a cross section enlarged relative to the cross sectional thickness of said wedge, and the grooves (19) have a cross section widening accordingly in the interior and forming undercuts (21).

13. The clamp as claimed in any one of the preceding claims, characterized in that the cross section of the beads (20) on the wedge (10) and of the widenings (22) in the grooves (19) is approximately circular and that the beads (20) engage in the widenings (22) with play.

Fig.2

Fig.1

Fig. 3

Fig. 4